# EUROPEAN PATENT APPLICATION

(11) **EP 1 096 772 A2**
(43) Date of publication of application: **02.05.2001**
(21) Application number: 00306708.9
(22) Date of filing: 07.08.2000
(51) Int. Cl.: H04M 17/00

(54) **Pre-paid telephone calling card service implemented via switch-based intelligent network**

(30) Priority: 21.08.1999 US 379206
(71) Applicant: LUCENT TECHNOLOGIES INC., Murray Hill, New Jersey 07974-0636 (US)
(72) Inventor: Cai, Yigang, Naperville, Illinois 60565 (US); Tsai, Steve Wutien, Lisle, Illinois 60532 (US); Mohanty, Pradeep K., Naperville, Illinois 60540 (US)
(74) Representative: Buckley, Christopher Simon Thirsk

(57) **Abstract**

An improved implementation of pre-paid telephone calling cards uses a switch-based intelligent network (IN) for automated processing of pre-paid calling card account transactions. Calling card account number, corresponding PINs, account status information and others are stored in tables maintained by one or several switches for routing calls, each switch nominally including a Service Switching and Control Point (SSCP), an Originating Call Processor (OCP), and a Terminating Call Processor (TCP). In the preferred embodiment, each switch also contains an Operator Service System (OSS) for allowing a telephone operator to direct call processing either by choice of the customer or as backup to the automatic processing capability of the SSCP.

## Description

### Field Of The Invention

The present invention generally relates to improvements in pre-paid telephone calling card (PPCC) service.

### Background

Telephone calling cards are used as convenient media for storing information representative of telephone service subscriber accounts. Calling cards can be as simple as plastic card stock with a card number and a service access telephone number listed thereon, or as complicated as a "smart card" containing electronic circuitry therein. Other versions include calling cards with magnetic strips for storing card numbers and perhaps a personal identification number (PIN) for security purposes.

Telephone calling cards are broadly classified as either "post-paid," in which a customer maintains an account and periodically pays in arrears for charges to the account, and "pre-paid," in which a customer purchases a card evidencing an account providing a fixed monetary value or a fixed amount of time of telephone service. The demand for pre-paid telephone calling card service continues to grow, and shows no signs of abatement.

Intelligent Networks (INs) are software and hardware hybrids which can be used to automatically process telephone calls in a telephone system. Besides routinely routing calls from a calling party to a called party/destination number, an IN may also be adapted to handle various pre-paid and post-paid calling card transactions, as well as non-calling card transactions.

A service control point (SCP) in the IN provides the logic that governs call-handling, etc., and contains a database that stores useful information needed for various transactions. The IN also contains one or several switches for both receiving calls to the network and physically routing calls to destination numbers. Each switch contains a Service Switching Point (SSP) for interfacing with calling parties and performing the actual call routing under the instruction of the SCP. The SCP and SSP may be connected with a high-speed link utilizing, for example, the Intelligent Network Application Protocol (INAP), as approved by the European Telecommunications Standards Institute (ETSI) and International Telecommunication Unit (ITU).

The above-described IN is network-based, and has been used for both pre-paid and post-paid calling card service systems. Unfortunately, the power and precision of INs has not been used by service providers for calling card systems due to heavy capital investment requirements needed for creating and maintaining a centralized SCP-based network. In a significant departure from the teachings of the prior art, pre-paid calling card systems could be implemented using a switch-based intelligent network.

For switch-based systems, the call control logic and the PPCC database either resides in a switch or is hardwired to the switch. Currently, most of deployed switch-based PPCC systems are adjuncts attached to the switch. The adjuncts are the cheapest solution to the service providers. They contain both service logic and a database. However, the major disadvantage of adjuncts is that every pre-paid call needs to be transmitted through trunks in the switch, which causes bottlenecking in the switch. The adjunct solution also adds extra hardware to the system.

While a switch-based, intelligent-networked pre-paid calling card system would provide automaticity and speed, it would not have the flexibility of allowing human intervention to prevent loss of revenue and customer frustration, where the intelligent network is unable to process the call.

### Summary Of The Invention

To address the unmet needs of the prior art, the present invention provides a telecommunications system for processing pre-paid telephone calling card account telephone calls. The system at least includes a plurality of telephone lines for handling telephone calls, and a plurality of switches, each switch operatively coupled to origination telephone lines, and adapted to route authorized calls to a destination number specified by a customer.

Each switch at least includes a Service Switching and Control Point (SSCP) adapted to authorize and direct the routing of telephone calls, the SSCP storing account information for each calling card account supported by the switch. Each switch is also accessible by a call originating customer upon the system receiving a customer-generated Service Access Code (SAC).

The present invention also provides a method for processing pre-paid telephone calling card account telephone calls. The method at least provides the step of providing a plurality of telephone lines for handling telephone calls, and providing a plurality of switches, each switch operatively coupled to origination telephone lines, for routing authorized calls to a destination number specified by a customer via the switch.

The method further includes the step of providing within each switch, a Service Switching and Control Point (SSCP) for authorizing and directing the routing of telephone calls via the SSCP, and storing via the SSCP account information for each calling card account supported by the switch. A switch is accessed by a call originating customer, when a customer-generated Service Access Code (SAC) is received.

### Brief Description Of The Drawing Figures

Features and advantages of the present invention will become apparent to those skilled in the art from the description below, with reference to the following drawing figure, in which:

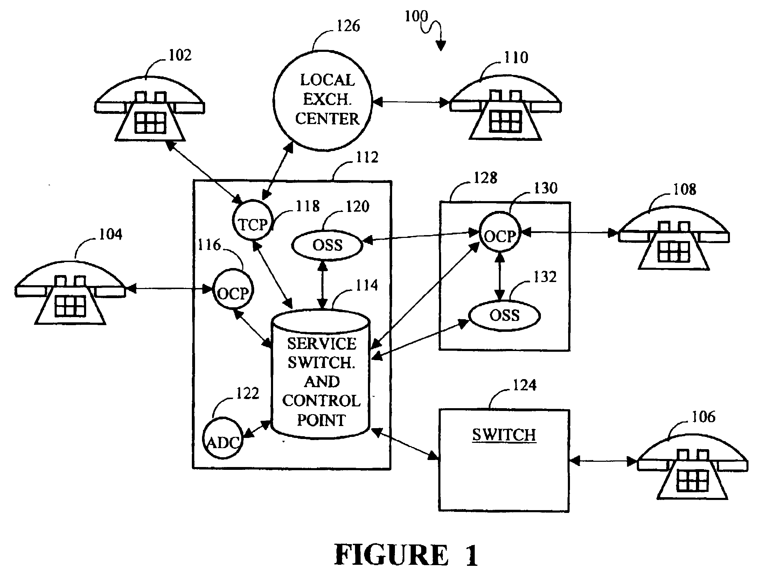

Figure 1 is a schematic block diagram of the basic hardware for the present-inventive telecommunications system adapted for pre-paid calling card telephone call processing.

### Description Of The Preferred Embodiments

The basic hardware of the telephone service system 100 is illustrated in Figure 1.

The system 100 has several switches such as the ones 112, 124 and 128 forming a switched-based intelligent network (IN). At least one of the switches contains a Service Switching and Control Point (SSCP) 114. The SSCP contains call flow logic and stores information in a calling card table for a number of pre-paid calling accounts. The system 100 also includes telephone lines for handling origination and destination telephone calls via telephonic devices, 102, 104, 106, 108, and 110, etc. Some of the telephonic devices are directly connected via telephone lines to a switch, while others are connected through a local exchange center such as the one 126 shown in the figure.

In the preferred embodiment, the calling card table nominally includes an entry for each calling card account serviced by the switch. The entry includes the calling card number, the PIN, the card status (i.e., active, non-active, unexpired, expired, in use, etc., the number of credit units remaining) as shown in the pre-paid calling card example Table 1.

**TABLE 1**

| PPCC | PIN | Status Indicator | Credit Unit |
|---|---|---|---|
| 1234 5678 0001 | 2222 | Not Activated | 5000 |
| 1234 5678 0002 | 6688 | Valid | 4500 |
| 1234 5678 0003 | 5577 | Invalid | 3000 |
| 1234 5678 0004 | 3433 | Deactivated | 3800 |
| 1234 5678 0005 | 4544 | Expired 1 | 5000 |
| 1234 5678 0006 | 2828 | Expired 2 | 1200 |
| 1234 5678 0007 | 7788 | In Use | 4500 |
| .... .... .... | .... | .......... | .... |
| .... .... .... | .... | .......... | .... |

Credit Units are monetary units (or equivalent, such as time units) determining the amount of service that can be provided by a calling card.

Pre-paid calling cards supported by the system can have a factory determined initial PIN. Once sold, the merchant can for example, dial up the switch with the responsible SSCP using an appropriate Service Access Code (SAC) and change the PIN from the factory PIN to a PIN which indicates purchase, but not customer usage. Thereafter, the customer can dial the SAC and change the PIN to his/her liking.

The following card status indicators are used in the preferred embodiment: "Not Activated" -- the card has been sold, but not yet activated; "Valid" -- the card is activated and the card number is valid; "In Use" -- the card number is valid and already in use by one customer to prohibit simultaneous use by more than one customer; "Invalid" -- the card number is invalid for security reasons, or because the account balance is insufficient for the transaction (not enough credit units); "Deactivated" -- the card has been deactivated by the account subscriber; "Expired 1" -- the card has been sold, but not timely activated by the customer; and "Expired 2" -- the card has been sold and was timely activated, but the predetermined use window has expired (for example, the card can be used for up to one year after purchase).

To complete a transaction a pre-paid calling card (PPCC) customer can dial directly to a switch 112 by dialing a Service Access Code (SAC) unique to the switch. The SAC is followed by a PIN and a desired destination telephone number. An Originating Call Processor (OCP) 116 (or 130 in the case of the switch 128) within the switch 112 transfers the call to the SSCP. An Announce and Digit Collection (ADC) unit 122, announces transaction instructions to a customer, and prompts the customer for information such as PIN, destination number, and other information such as would be required to change the PIN, or change the activation status of the card.

A Terminating Call Processor (TCP) 116 handles the termination of call processing once a call has been connected to the destination number.

Each switch can also include an Operator Service System (OSS), such as the ones 120 and 132 shown in the figure. The OSS is an interface allowing a transaction to be processed by a telephone operator, either by the choice of a customer, or when the service logic of the SSCP bails out from a current transaction to the OSS. Bailout can occur for such reasons as failure of the PPCC customer to enter information within a predetermined time period, apparent inaction by the customer, or entry of a PIN that does not match the PIN stored in the PPCC table.

In operation, once the OCP receives a telephone call, it performs digits analysis on the digits received from the customer and sends an InitialDP operation to the SSCP.

The SSCP determines whether the information gleaned from the digits received from the customer includes a matching PIN. The customer is prompted to enter information by the ADC unit 122, as previously stated. If the PIN matches, the operation continues. If not, the customer is reprompted for a new PIN a predetermined number of times (e.g., 3). Upon the failure of entering a PIN matching the one listed in the PPCC Table for the calling card number, the system 100 bails out to an operator via the OSS 120 for further processing of the call.

If the PIN matches and there are no calling card status indicator impediments to the transaction (i.e., the card is valid, activated and unexpired) the SSCP sends a ConnectToResource operation to the TCP. The ConnectToResource operation includes the routing address of the destination number.

The call flow of the system 100 is described below. A call flow is an algorithm governing the call processing of a telephone call.

First, a customer accesses the PPCC service by dialing a SAC. The SSCP instructs the ADC to play a main menu and prompt the customer for information when needed. In the preferred embodiment, a customer has a choice of which language to hear the instructions. For example, the ADC might announce a message such as "Please press 1 for English, press 2 for Spanish, press 3 for Chinese ...." The customer is then instructed to enter the calling card number and PIN for validation. The transaction is either validated or bailed out to the OSS, if validation is unsuccessful.

Afterwards, the customer can select a transaction from a secondary menu, such as activating a card, changing a PIN, or completing a telephone call.

When a customer elects to place a call, he/she is prompted for a destination number. After receiving the destination number (DN) the SSCP makes a preliminary check of the PPCC Table to determine whether there are enough credit units in the account to place the call. For example, all long distance calls might require a minimum number of credit units. A card account with less than the minimum number of required credit units will not support the call, and the ADC will announce this fact to the customer.

After the preliminary credit unit check is made and passed, the SSCP directs the switch to connect the call to the DN and sets a countdown timer corresponding to the time associated with the available credit units for the particular call, and then starts the timer. When the timer reaches a predetermined point near zero (for example, one minute remaining), an announcement is played alerting the customer of the available time left in the account. If zero is reached before the customer terminates the call, an announcement is played stating that no more time is available in the account, followed by an automatic hang-up. In an alternate embodiment, the called party can be placed on hold, and the customer transferred to an operator to determine whether the customer would like to use another calling card or credit card to continue the transaction.

After the call is completed, the PPCC account credit units are decremented to reflect the charges for the call.

Variations and modifications of the present invention are possible, given the above description. However, all variations and modifications which are obvious to those skilled in the art to which the present invention pertains are considered to be within the scope of the protection granted by this Letters Patent.

## Claims

1. A telecommunications system for processing pre-paid telephone calling card account telephone calls comprising:
a plurality of telephone lines for handling telephone calls; and
a plurality of switches, each switch operatively coupled to origination telephone lines, adapted to route authorized calls to a destination number specified by a customer;
wherein each switch comprises a Service Switching and Control Point (SSCP) adapted to authorize and direct the routing of telephone calls, said SSCP storing account information for each calling card account supported by said switch; and
wherein each switch is accessible by a call originating customer upon the system receiving a customer-generated Service Access Code (SAC).

2. The system in Claim 1 wherein said SSCP is adapted to activate a pre-paid calling card account by, upon the dialing of said SAC by a customer or merchant and receiving a calling card number evidencing said pre-paid calling card account for the first time, and said SSCP is further adapted to change a preset Personal Identification Number (PIN) to a second PIN.

3. A method for processing pre-paid telephone calling card account telephone calls comprising the steps of:
providing a plurality of telephone lines for handling telephone calls;
providing a plurality of switches, each switch operatively coupled to origination telephone lines, and routing authorized calls to a destination number specified by a customer via said switch;
providing within each switch, a Service Switching and Control Point (SSCP) and authorizing and directing the routing of telephone calls via said SSCP, said SSCP storing account information for each calling card account supported by said switch; and
accessing a switch by a call originating customer, upon receiving a customer-generated Service Access Code (SAC).

4. The method in Claim 3 further comprising the step of activating a pre-paid calling card account by, upon the dialing of said SAC by a customer or merchant and receiving a calling card number evidencing said pre-paid calling card account for the first time, changing a preset Personal Identification Number (PIN) to a second PIN.

5. The method in Claim 3 further comprising the steps of:
indicating that a calling card has been sold by receiving a second Personal Identification Number (PIN) generated by a merchant to replace a first preset PIN; and
activating a calling card account by receiving a third PIN generated by a customer.

6. The method in Claim 3 further comprising the steps of:
prompting a customer for a Personal Identification Number (PIN) to authorize a calling card transaction;
receiving a PIN generated by a customer;
comparing a received PIN with a stored PIN to determine a match, vel non, of stored and received PINs; and
transferring call processing to an Operator Service System when the compared PINs fail to match a predetermined number of times.
